# EUROPEAN PATENT APPLICATION

(11) **EP 3 653 670 A1**
(43) Date of publication of application: **20.05.2020**
(21) Application number: 18831939.6
(22) Date of filing: 31.05.2018
(51) Int. Cl.: C08L 75/04, C08K 3/36, C08J 5/18, C08J 5/22

(54) **COMPOSITION OF THERMOPLASTIC POLYURETHANE SHEET FOR BAG OR BILLFOLD**

(30) Priority: 12.07.2017 KR 20170088279
(71) Applicant: Park, Heedae, Busan 47585 (KR)
(72) Inventor: Park, Heedae, Busan 47585 (KR)
(74) Representative: Treeby, Philip David William
(86) International application number: PCT/KR2018/006234
(87) International publication number: WO 2019/013450

(57) **Abstract**

The present invention relates to a composition of a thermoplastic polyurethane sheet bonded to a fabric when producing an outer cover material for a bag or a purse, wherein the composition includes 1 to 5 parts per hundred resin(phr) of nanosilica having a particle size of 100 nm or less based on thermoplastic polyurethane (TPU).The composition of the thermoplastic polyurethane sheet for outer cover for bag or purse.The TPU sheet having excellent physical properties without using the conventional PVC sheet can be manufactured by bonding to the fabric so that it has an advantage of being able to realize excellent moldability (foldability) at a folded portion of the bag or purse while being environmentally friendly. It also has the advantage of manufacturing bags and wallets that have a good sense of touch and feel and are not well-worn.

## Description

### CROSS-REFERENCE TO RELATED APPLICATIONS

This application claims the benefit under 35 U.S.C. Section 371, of PCT International Application No. PCT/KR2018/006234, May31, 2018 filed, which claimed priority to Korean Patent Application No. KR 10-2017-0088279, filed July 12, 2017, the disclosures of which are hereby incorporated by the references.

The present invention relates to a composition of a thermoplastic polyurethane sheet for bag or purse using nano silica, and more particularly to a composition for a thermoplastic polyurethane sheet for a bag or a wallet by bonding a thermoplastic polyurethane sheet to a fabric, To a composition of a thermoplastic polyurethane sheet for a bag or a purse, which is capable of imparting good moldability to the composition.

### [Background Art]

Normally, most of the materials currently being used as outer cover materials for bag or wallet are made by bondinga polyvinyl chloride (PVC) sheet to a fabric with a hot-melt film and coating the surface of the outer cover with a pattern.

As PVC is designated as an environmentally regulated substance, it is replacing it with a thermoplastic polyurethane (TPU) sheet.

The TPU sheet has excellent physical properties and merits as eco-friendly materials, but the TPU sheet is poor in moldability because the TPU sheet is not easily formed at a folded portion of a bag or a wallet when the TPU sheet is formed by bonding to a fabric for a bag or a wallet with a hot-melt film.

Thus, TPU has limitations in its use as an outer cover materials for bags and walletssince the material characteristic is excellent elastic and restorative material.

### RELATED ARTS

### [Patent Documents]

Patent Document 1
   Patent Registration No. 10-0968854 (Title of Invention:TPU or PVC sheet structure having a clear color and gloss and preventing decolorization thereof and method for preparing for the same, Publication Date: July 09, 2010)
Patent Document 2
   Patent Registration No. 10-2003-0078273 (Title of Invention:An elastic sheet composition for use in manufacture of sofa orbag and asofa or bag sheet prepared therefrom, Publication Date: October 08, 2003)
Patent Document 3
   Patent Registration No. 10-0959883,Title of Invention:Manufacturing method for conductive theomoplasticpolyurethnae sheet and theomoplasticpolyurethnae sheet using the same, Publication Date: May 27, 2010)
Patent Document 4
   Patent Utility Registration No. 20-0406173,Title of Invention: thermoplastic polyurethane sheet, Publication Date: January 20, 2006)

### Disclosure of the invention

### [Technical Solution]

Aspect(s) of the present invention provides a composition of a thermoplastic polyurethane (TPU) for a bag or a pursewhich contains a small amount of nanosilica in a thermoplastic polyurethane (TPU) sheet bonded to a fabric, thereby achieving good moldability (foldability) at the folded portion without changing the physical properties of the TPU when manufacturing the bag material for the bag or the purse.

### SOLUTION TO THE PROBLEM

The composition of the thermoplastic polyurethane sheet for a bag or handbag according to the present invention is a composition of a thermoplastic polyurethane sheet bonded to a fabric in the production of anouter cover material used for a bag or a purse,the composition may include 1 to 5 parts per hundred resin (phr) of nanosilica having a particle size of 100 nm or less based on thermoplastic polyurethane (TPU).

According to a preferred embodiment of the present invention, the TPU is a polyester polyol based TPU.

### EFFECTS OF THE INVENTION

The present invention relates to a process for producing an outer cover of a bag or a purse by manufacturing a TPU sheet having excellent physical properties by bonding it to a fabric so as to be environmentally friendly and having excellent moldability (foldability) can be implemented without using a conventional PVC sheet.

In addition, using a TPU sheet, an outer cover of a bag or a purse can produce according to an aspect of the present invention, it feels good to touch and does not wear well

Especially, environment-friendly bags and wallets, without using PVC, which is an environmental regulation material.

### [DETAILED DESCRIPTION OF THE INVENTION]

Hereinafter, preferred embodiments of the present invention will be described in detail. In the following detailed description, exemplary embodiments of the present invention will be described in order to accomplish the above-mentioned technical problems.And other embodiments which may be presented by the present invention are replaced by descriptions in the constitution of the present invention.

An aspect of the present invention is that producing an outer cover for a bag or a wallet using the TPU sheet, which is an eco-friendly material, without using the PVC sheet, which is an environmentally regulating material, so that the TPU sheet can be folded into a bag or a wallet (Polyurethane) sheet for a bag or purse, which can solve the disadvantage that it is difficult to be molded in a part of the TPU and can have a good moldability (foldability) without changing the physical properties of the TPU.

As described above, in order to solve the problem of poor formability at a folded potion of a bag or a purse,Specifically, the TPU should be free of elasticity and restoring force, which is the nature of the TPU, without changing the physical properties of the TPU.

The test was carried out various inorganic materials with TPU by mixing and compounding according to an aspect of the present invention.

As a result of testing various inorganic materials, it is confirmed that the TPU sheet prepared by mixing or compounding the nano silica when polymerizing has good moldability (foldability) at a folded portion of the bag without changing the physical properties.

In the following, the related test data and the technical structure as described above will be specifically described according to aspect(s) of the present invention.

In the present invention, when preparing a TPU sheet, a color pigment and nano silica are mixed,wherein the nano silica, a primary particle, having a primary particle size of 100 nm or less is preferred.

The nano silica is preferably mixed with 1 to 5 parts per hundred resin (phr) based on the thermoplastic polyurethane.

As a method of applying the nano silica, there are a method of mixing a TPU when polymerizing and a method of preparing a masterbatch and then compounding.

At this time, a pattern may be coated on the TPU sheet without forming a color pigment during the production of the TPU sheet.

The TPU sheet may be bonded to a fabric using a hot-melt film so as to be used as anouter cover material for a bag or a purse.

Meanwhile, in Table 1 below, in order to have a folding portion molding property similarto that of a PVC sheet, evaluation is carried out by compounding different inorganic substances in a conventional TPU sheet.

At this time, evaluation method of bag sheet was applied to the evaluation method.

**[Table 1]**

| comparison Item | Talc | Calcium carbonate | Conventional Silica | Nano silica | Remarks |
|---|---|---|---|---|---|
| TPU Grade | BY-85AT | BY-85AC | BY-85AS | BY-85ANS | |
| Mineral Content(phr) | 30phr | 30phr | 20phr | 3phr | Optimum input amount |
| Melt Flow Index(g/10min) | 5.5 | 3.8 | 7.3 | 9.7 | 200°C, 2.16kgf |
| Tfb(Flow Beginning Temp.°C) | 162.3 | 163.5 | 158.2 | 157.5 | |
| Tensile Strength | 150kgf/cm² | 130kgf/cm² | 180kgf/cm² | 250kgf/cm² | SPEC min 200kgf/cm² |
| Tensile Strength (2 weeks after Hydrolysis) | 70kgf/cm² | 60kgf/cm² | 100kgf/cm² | 220kgf/cm² | SPEC min 160kgf/cm² (maintain 80% of previous) |
| Shore A | 85±3 | 85±3 | 84±3 | 83±3 | |
| Cold Bending Resistance(-10°C, cycle) | 30,000 fail | 30,000 fail | 50,000 fail | 100,000 pass | SPEC 100,00C cycle pass |
| Moldability (Foldability) | Improvement | Good if Input above 30phr | Good if Input above 20phr | Good if Input above 1 phr | |

Referring to Table 1, when using Talc, the moldability (foldability) was not improved at a folded portion of the bag, and the moldability (foldability) was not improved even when the content of talc was increased.

In a case of using calcium carbonate, moldability was good at folded portion of the bag when 30 phr or more of the thermoplastic polyurethane was used, but the physical properties were not good.

In case of using conventional silica, moldability (folding property) was good at the folded portionof the bag when 20 phr or more of silica based on the thermoplastic polyurethane is used, but the physical properties were not good.

However, when the nanosilicais used, the moldability (foldability) was good at the folded portionof bag when more than 1 phr of the thermoplastic polyurethane was used according to an aspect of the present invention.

As described above, the use of a small amount of the nanosilica resulted in good moldability and does not affect the physical properties of the TPU.

Hereinafter, a method for producing a resin for a TPU sheet using nanosilica having no problem in moldability (folding property) in a bag-shaped folded portion as shown in Table 1 will be described in detail.

Thermoplastic polyurethane that is used in the present invention is virgin TPU. The virgin TPU is prepared by polymerizing polyester polyol, polyether polyol, polycarprolactone or the like with aromatic isocyanate or aliphatic isocyanate using short chain glycol (e.g., 1,4-butanediol) as a chain extender.

In addition to the virgin TPU, various types of TPU scraps such as TPU scrap used for shoes, scrap remaining after high-frequency work, scrap remaining after hot-melt TPU processing, etc., or, can be used alone or mixed with the virgin TPU according to aspect of the present invention.

Particularly, a TPU sheet can be used as an outer cover material for a bag or a wallet without using a PVC sheet according to an aspect of the present invention.

In order to improve the modability in a folded portion of the bag or the wallet, inorganic materials are used as an additive. In particular, nanosilica having a particle size of 100 nm or less is usedaccording to an aspect of the present invention.

That is, in order to improve the moldability (foldability) by reducing the elasticity and excellent restoring force, which are inherent characteristics of the TPU, a conventional inorganic substance for example, Talc, calcium carbonate, or silica has a content of more than 20 to 30 phrshould be addedbased on the thermoplastic polyurethane.

This results in failure to meet the physical properties required for the bag, such as tensile strength, hydrolysis proof resistance and cold flex resistance, as shown in Table 1.

Accordingly, in order to solve the above problems, it is confirmed that an addition of only a small amount of nano silica, 1 phr or more, based on the thermoplastic polyurethane improves the moldability (foldability) and the physical properties are also satisfactory according to aspect(s) of the present invention.

Nano silica having such characteristics can be compounded with TPU in two ways. First, nanosilica powder is mixed with liquid material such as anyone of polyol, isocyanate, and short chain glycols when TPU Pellet polymerizing, followed by thorough stirring, and then TPU pellet polymerization.

At this time, the content of the nano-silica is preferably at most 10%, and stirring is difficultif the nano-silica is added in an amount of 10% or more.

Second, it is a method to concentrate nanosilica powder into conventional TPU to prepare a compounded masterbatch, and then to add the compounded masterbatch to the TPU resin.

At this time, it is preferable that the content of nano silica is at most 40% at the time of preparing the master batch. If 40% or more of the nano silica is added, the master batch can not be manufactured due to no compound with the TPU.

Therefore, up to 40% of nanosilica having a particle size of 100 nm or less is added to the TPU when it is compounded according to an aspect of the present invention. In order to prepare an ideal masterbatch, the content of the nano silica is preferably 30%.

In the following, a method for producing a resin for a TPU sheet by addingnanosilica into a liquid raw material upon polymerization on a TPU, and a method for preparing a masterbatch by compounding nano silica and TPU will be described in detailaccording to aspects of the present invention.

First, a method for producing a resin for a TPU sheet according to aspect of the present invention, specifically, a method for preparing a resin for a TPU sheet by adding resin into a liquid raw material at the time of TPU pellet polymerization and polymerizing the same.

First. a liquid raw material for conventional TPU pellet polymerization is prepared, preferably a polyol, an isocyanate, or a short chain glycol is prepared.

Then, any one of the liquid raw materials suggested in the above step is selected, and the nanosilica having a particle size of 100 nm or less is inputted and kneaded. At this time, the temperature is preferably about 80 to 100°C and the stirring speed is preferably 20 to 30 rpm.

For example, in the present invention, a nanosilica is mixed with a polyol and then kneaded.

Next, in the kneading process, the liquid raw material in which nanosilica is sufficiently dispersed and the other two raw materials are simultaneously added into a reactive extruder to perform TPU pellet polymerization, and then the polymerized TPU pellets are dried and aged to prepare a resin for a TPU sheet.

Secondly, a method for producing a master batch containing nanosilica according to the present invention is specifically described.

First, the aforementioned TPU (e.g., virgin TPU or TPU scrap or a TPU mixed with them) and nanosilica having a particle size of 100 nm or less are quantified by the content.

At this time, the content of the nanosilica should not exceed a maximum of 40%.

Thereafter, the nanosilica and the TPU are put into a conventional kneader and kneading at a temperature of 100 to 120 ° C at a speed of 20 to 30 rpm.

Next, the TPU kneaded with the nanosilica is cooled, pulverized to have a diameter of less than 10 mm, and then re-introduced into a conventional twin extruder.

At this time, the temperature of the twin extruder is about 150 to 200 °C.

Thereafter, the compounded resin in the extruder is poured into cooling water of 15 to 20 ° C to form pellets, and then the cooled compounded is dried and aged to prepare a masterbatch.

The masterbatch prepared as described above is mixed with conventional TPU and compounded to prepare a resin for a TPU sheet.

According to aspect(s) of the present invention, in order to confirm the physical properties of the TPU sheet produced by the above-mentioned method, 1) a resin for a TPU sheet containing nanosilica of 100 nm or less and 2) a resin for the TPU sheet prepared by the masterbatch a resin containing a nanosilica of 100 nm or less, the physical properties of the resins are shown in Tables 2 and 3 below.

**[Table 2]**

| Test Grade | MFI (200°C, 2.16kg) | Tfb | Input amount of Nano silica | Evaluation Sheet extrudability & bag modability (foldability) | |
|---|---|---|---|---|---|
| | (g/10min) | (°C) | | Sheet extruability | modability (foldability) |
| BY-85ANS-1 | 12.3 | 155.2 | 0.5phr | Working good | Restration of Folded portion & no good moldability |
| BY-85ANS-2 | 10.5 | 156.3 | 1phr | Working good | Without Restration of Foldedportion &good moldability |
| BY-85ANS-3 | 9.7 | 157.5 | 3phr | Working good | Without Restration of Folded portion & good moldability |
| BY-85ANS-4 | 7.5 | 158.2 | 5phr | Working good | Without Restration of Folded portion & good moldability |
| BY-85ANS-5 | 4.4 | 160.5 | 10phr | Working no good due to surface is slippery | good moldability but slippery |

First, each amount of nano-silica is added to the conventional TPU to polymerize the TPU sheet to prepare a resin for the TPU sheet. The results are shown in Table 2.

Namely, the sheet extrusion and bag moldability(foldiability) of TPU pellets are compared when making the resin for the TPU sheet containing the nano silica, the nano silica is used in an amount of 0.5 phr, 1 phr, 3phr, 5phr, and 10phr, respectively, based on the thermoplastic polyurethane.

At this time, a polyester polyol base TPU having a hardness of Shore 85 A was used according to an aspect of the present invention.

In Table 2, "BY-85ANS-1", "BY-85ANS-2", "BY-85ANS-3", "BY-85ANS-4" and "BY-85ANS-5, are names of trade product of TPU sheet resin, specifically, nanosilica having a particle diameter of 100 nm or lessis 0.5 phr, 1 phr. 3 phr, 5 phr, and 10 phr, respectively, based on the thermoplastic polyurethane,.

As shown in Table 2, it was confirmed through experimentation that the optimum input amount of the nano silica to be added is 1 to 5 phr based on the thermoplastic polyurethane when the resin for the TPU sheet is polymerized with the nanosilica.

When 10phr or more nanosilica is added, it is difficult to inject the nanosilica because it is not kneaded in the liquid raw material.

Second, the test was conducted according to the content of the masterbatch containing the nano silica, which is a conventional TPU and the compound, and the results are shown in Table 3 below.

That is, when preparing the TPU sheet by compounding the master batch of the present invention (concentration of 30 wt.% of nano silica) with conventional TPU, the master batch was prepared by mixing 2 phr, 5 phr, 10 phr, 20 phr, and 30 phr, extrudability of the TPU sheet and the bag moldability (foldability) were compared.

At this time, TPU based on polyester polyols having a hardness of Shore 85 A was used according to aspect(s) of the present invention.

**[Table 3]**

| Test Grade | MFI(200°C, 2.16kg) | Tfb | Masterbatch input amount(actu al input) | Evaluation of sheet Extruability and bag moldability(Foldability) | |
|---|---|---|---|---|---|
| | (g/10min) | (°C) | | Sheet Extruability | Moldability (Foldability) |
| BY-85ANS-M1 | 14.7 | 155.3 | 2phr(0.6phr) | Vorking good | No restoration of folded portion&no good moldability |
| BY-85ANS-M2 | 12.4 | 157.3 | 5phr(1.5phr) | good working | No restoration of folded portion good moldability |
| BY-85ANS-M3 | 11.9 | 157.7 | 10phr(3phr) | good working | no restoration folded portion &good moldability |
| BY -85ANS-M4 | 9.8 | 158.6 | 20phr(6phr) | good working | No restoration of folded portion & good moldability |
| BY-85ANS-M5 | 8.4 | 159.5 | 30phr(9phr) | Surface is slippery, thus no good working | Good moldability &but slippery |

Test grades in the above Table 3, BY-85ANS-M1, BY-85ANS-M2, BY-85ANS-M3, BY-85ANS-M4 and BY-85ANS-M5 refer to a resin for a TPU sheet containing 2 phr, 5 phr, 10 phr, 20 phr, and 30 phr of a master batch containing nanosilica of 100 nm or less based on the thermoplastic polyurethane, respectively.

As shown in Table 3, when the masterbatch containing nano silica and the TPU were compounded to prepare the TPU sheet, it is experimentally determined that anoptimum input amount of the masterbatch is 5 to 20 phr based on the thermoplastic polyurethane respectively.

It was confirmed that the TPU sheet is slippery and the blooming phenomenon was severe when the masterbatch is put at 30 phr or more.

## Claims

1. A composition of a thermoplastic polyurethane sheet, which is bonded to a fabric, for an outer cover material for a bag or purse,
wherein the composition comprises nanosilica and thermoplastic polyurethane (TPU).

2. The composition of the thermoplastic polyurethane sheet of claim 1, wherein the nanosilica has a particle size of 100 nm or less.

3. The composition of the thermoplastic polyurethane sheet of claim 1 or claim 2, wherein the nanosilica having 1 to 10 parts per hundred resin.
